# EUROPEAN PATENT APPLICATION

(11) **EP 4 826 362 A1**
(43) Date of publication of application: **21.10.2026**
(21) Application number: 24904380.3
(22) Date of filing: 11.12.2024
(51) Int. Cl.: G01N 21/78, G01N 21/25, G01N 30/96, G01N 1/40

(54) **DEVICE AND METHOD FOR MEASURING ION EXCHANGE CAPACITY OF ION EXCHANGE MEMBRANE**

(30) Priority: 12.12.2023 KR 20230179454
(71) Applicant: POSCO Holdings Inc., Pohang-si, Gyeongsangbuk-do 37859 (KR)
(72) Inventor: LEE, Sihwa, Pohang-si, Gyeongsangbuk-do 37859 (KR); WI, Jin Yeop, Pohang-si, Gyeongsangbuk-do 37859 (KR); SEO, Junyoung, Pohang-si, Gyeongsangbuk-do 37859 (KR)
(74) Representative: Pfenning, Meinig & Partner mbB
(86) International application number: PCT/KR2024/096749
(87) International publication number: WO 2025/127815

(57) **Abstract**

A device for measuring ion-exchange capacity of ion-exchange membrane according to embodiments includes: an ionic conductivity change calculator for deriving a first and second trend lines for changes in ionic conductivity along reaction time of titration solution and for calculating first and second boundaries; a color information extractor for extracting color information of the titration solution at predetermined reaction intervals from an image illustrating a color change of the titration solution along the reaction time; a color transition point determinator for extracting transition points based on the extracted color information, and for selecting, from the transition points, a transition point located between the first and the second boundaries based on the reaction time to determine the transition point as a color transition point; and ion-exchange capacity calculator for calculating the capacity of the membrane based on the titration solution at the color transition point.

## Description

### [TECHNICAL FIELD]

The present invention relates to a device and a method for measuring ion-exchange capacity of ion-exchange membrane, and more particularly, to a device and a method for measuring the ion-exchange capacity of ion-exchange membrane that measure objective ion-exchange capacity by combining a change in ionic conductivity and a change in color.

### [BACKGROUND ART]

Most of the existing ion-exchange capacity measurement methods use only the argentometric titration method. Since the argentometric titration method is subjective and tends to rely on human intuition, it is difficult for measurement methods of each membrane manufacturer to be universally applied. In particular, when utilized in an electrodialysis process, a stable supply and demand through diversification of supply lines of membrane suppliers is required, but the argentometric titration method has a problem in that it may not be objectively and universally applied to calculate a performance index of the ion-exchange membrane.

### [DISCLOSURE OF INVENTION]

### [TECHNICAL PROBLEM]

An embodiment of the present invention provides a device and method for measuring ion-exchange capacity of ion-exchange membrane, the device and method calculating a final end point by combining a group of end point candidates determined through an ionic conductivity gradient and a color transition point generated by storing and quantifying a color change of a titration solution as an image, and measuring the ion-exchange capacity based on the final end point.

### [TECHNICAL SOLUTION]

In some embodiments, a device for measuring ion-exchange capacity of ion-exchange membrane includes: an ionic conductivity change calculation unit for deriving a first trend line and a second trend line for a change in ionic conductivity of a titration solution along reaction time wherein the titration solution being prepared by adding a titrant to a solution containing anions eluted from the ion-exchange membrane, and to calculate a first boundary point at which a slope of the first trend line changes and a second boundary point at which a slope of the second trend line changes, respectively; a color information extraction unit for extracting color information of the titration solution at a predetermined reaction time interval from an image representing a color change of the titration solution along the reaction time; a color transition point determination unit for extracting at least one transition point based on the extracted color information and to determine a color transition point by selecting, from the at least one transition point, a transition point located between the first boundary point and the second boundary point based on the reaction time; and ion-exchange capacity calculation unit for calculating ion-exchange capacity of the ion-exchange membrane based on the titration solution at the color transition point.

The ionic conductivity change calculation unit may: select, from a plurality of trend lines illustrating the change in ionic conductivity with respect to the reaction time, a trend line for which the reaction time of the first boundary point is calculated as the smallest value as the first trend line, and select a trend line for which the reaction time of the second boundary point is calculated as the largest value as the second trend line.

The ionic conductivity change calculation unit may determine an area between a first reaction time of the first boundary point and a second reaction time of the second boundary point as an end point area and extract a plurality of candidate end points having different reaction times within the end point area.

The color information extraction unit may extract the color information including an RGB value converted for a color extracted from the image.

The color information extraction unit may generate a graph representing the RGB values for the predetermined reaction time.

The color transition point determination unit may determine, as the at least one transition point, a point at which a sign of a gradient of a tangent line respectively generated at the RGB values for the predetermined reaction time in the graph changes.

The color transition point determination unit may determine, from the at least one transition point, a specific transition point having reaction time identical to any one of the reaction times for each of the plurality of candidate end points as the color transition point.

The ion-exchange capacity calculation unit may detect the ionic conductivity and the volume of the titrant at the reaction time corresponding to the color transition point.

The ion-exchange capacity calculation unit may measure the ion-exchange capacity of the ion-exchange membrane based on the volume of the titrant at the reaction time corresponding to the color transition point.

The ion-exchange capacity calculation unit may calculate the ion-exchange capacity according to the following Equation: [Equation] $IEC = \left(C\times f\times A\right) / D$ wherein IEC is the ion-exchange capacity of the ion-exchange membrane, C is concentration (mol/L) of the titrant, f is a factor representing total number of exchangeable anions per 1 mole of ions in the titrant, A is volume (ml) of the titrant, and D is dry weight (g) of the ion-exchange membrane.

In some embodiments, a method for measuring ion-exchange capacity of ion-exchange membrane includes: adding a titrant to a solution containing anions eluted from the ion-exchange membrane and deriving a first trend line and a second trend line for a change in ionic conductivity of a titration solution along reaction time; calculating a first boundary point at which a gradient of the first trend line changes and a second boundary point at which a gradient of the second trend line changes, respectively; extracting color information of the titration solution at every predetermined reaction time from an image illustrating a color change of the titration solution along the reaction time; extracting at least one transition point where a color of the titration solution is converted based on the extracted color information; determining a color transition point by selecting, from the at least one transition point, a transition point located between the first boundary point and the second boundary point based on the reaction time; and calculating the ion-exchange capacity of the ion-exchange membrane using the titration solution at the color transition point.

The deriving of the first trend line and the second trend line may further include: selecting, from a plurality of trend lines illustrating the change in the ionic conductivity with respect to the reaction time, a trend line for which reaction time of the first boundary point is calculated to be a smallest value as the first trend line; and selecting a trend line for which a reaction time of the second boundary point is calculated to be a largest value as the second trend line.

The calculating of the first boundary point and the second boundary point, respectively, may further include: determining an area between a first reaction time of the first boundary point and a second reaction time of the second boundary point as an end point area; and extracting a plurality of candidate end points having different reaction times within the end point area.

The extracting of the color information of the titration solution may further include extracting the color information including a converted RGB value for the color extracted from the image.

The extracting of the color information of the titration solution may further include generating a graph representing the RGB values for the predetermined reaction time.

The extracting of the at least one transition point may further include determining a point, at which the sign of the gradient of a tangent line generated at each of the RGB values for the predetermined reaction time in the graph changes, as the at least one transition point.

The determining of the color transition point may further include determining, from the at least one transition point, a specific transition point having reaction time identical to any one of the reaction times for each of the plurality of candidate end points as the color transition point.

The calculating of the ion-exchange capacity may further include detecting the ionic conductivity of the titration solution and the volume of the added titrant at reaction time corresponding to the color transition point.

The calculating of the ion-exchange capacity may further include measuring, by the ion-exchange capacity calculation unit, the ion-exchange capacity of the ion-exchange membrane based on the volume of the titrant at the reaction time corresponding to the color transition point.

The calculating of the ion-exchange capacity may further include calculating the ion-exchange capacity according to the following Equation: [Equation] $IEC = \left(C\times f\times A\right) / D$ wherein IEC is the ion-exchange capacity of the ion-exchange membrane, C is concentration (mol/L) of the titrant, f is a factor representing total number of exchangeable anions per 1 mole of ions in the titrant, A is volume (ml) of the titrant, and D is dry weight (g) of the ion-exchange membrane.

### [ADVANTAGEOUS EFFECTS]

A device and method for measuring ion-exchange capacity of ion-exchange membrane according to an embodiment of the present invention may be applied objectively and universally because a final end point is calculated by combining a group of end point candidates determined through an ionic conductivity gradient and a color transition point generated by storing a color change of a titration solution as an image and quantifying the color change, and the ion-exchange capacity is measured based thereon.

A device and method for measuring ion-exchange capacity of ion-exchange membrane according to an embodiment of the present invention may store a color change of a titration solution as video images, quantify each image into an average color value, cross-combine the quantified values with images in a group of end point candidates, and calculate a final end point to accurately measure ion-exchange capacity of an anion-exchange membrane.

### [BRIEF DESCRIPTION OF DRAWINGS]

FIG. 1 is a block diagram illustrating a device for measuring ion-exchange capacity of ion-exchange membrane according to an embodiment of the present invention.
FIG. 2 is a flowchart illustrating a step of calculating candidate end points of an end point area according to an embodiment of the present invention.
FIG. 3 is a flowchart illustrating steps of extracting a color conversion point from an image according to an embodiment of the present invention.
FIG. 4 is a flowchart illustrating a step of calculating ion-exchange capacity based on candidate end points and a color transition point according to an embodiment of the present invention.
FIG. 5 is a table illustrating changes in reaction time, an amount of titrant added, and ionic conductivity according to an embodiment of the present invention.
FIG. 6 is a graph illustrating a change in ionic conductivity of a titration solution along reaction time, according to an embodiment of the present invention.
FIG. 7 is a graph illustrating color information extracted from an image representing a color change of a titration solution along reaction time according to an embodiment of the present invention.
FIG. 8 is a diagram illustrating a step of detecting a final end point according to an embodiment of the present invention.
FIG. 9 is a diagram illustrating a computing device according to an embodiment of the present invention.

### [BEST MODE FOR CARRYING OUT THE INVENTION]

The ion-exchange capacity measuring device for ion-exchange membrane may finally measure the ion-exchange capacity of the ion-exchange membrane using a volume of a titrant added at a corresponding reaction time when any one of candidate end points obtained based on a change in ionic conductivity and a color transition point obtained based on a color change of a titration solution overlap with respect to the reaction time.

### [MODE FOR CARRYING OUT THE INVENTION]

Hereinafter, embodiments of the present invention will be described in detail with reference to the accompanying drawings so that those skilled in the art to which the present invention pertains may easily implement the same. However, the present invention may be implemented in various different forms and is not limited to the embodiments described herein. Further, in order to clearly explain the present invention in the drawings, parts irrelevant to the description are omitted, and like reference numerals are assigned to like parts throughout the specification.

Throughout the specification and the claims, when a part 'comprises' a constituent element, it means that the part may further include other constituent elements, rather than excluding other constituent elements, unless specifically stated otherwise. Terms including ordinal numbers such as first, second, etc. may be used to describe various constituent elements, but the constituent elements are not limited by the terms. The terms are used only for the purpose of distinguishing one constituent element from another.

Terms such as 'unit', 'device', and 'module' described in the specification may refer to a unit capable of processing at least one function or operation described in the specification, and may be implemented by hardware or circuitry, software, or a combination of hardware or circuitry and software.

Hereinafter, embodiments of the present invention will be described with reference to the drawings.

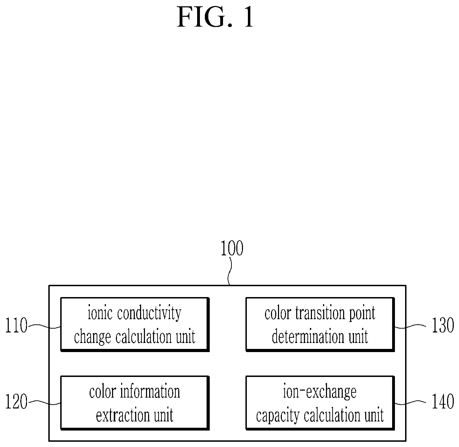

FIG. 1 is a block diagram illustrating ion-exchange capacity measuring device for ion-exchange membrane according to an embodiment of the present invention.

A device 100 for measuring the ion-exchange capacity of ion-exchange membrane may finally measure the ion-exchange capacity of the ion-exchange membrane using a volume of a titrant added at a corresponding reaction time when any one of candidate end points obtained based on a change in ionic conductivity and a color transition point obtained based on a color change of a titration solution overlap with each other based on the reaction time.

Referring to FIG. 1, the device 100 for measuring ion-exchange capacity of the ion-exchange membrane may include an ionic conductivity change calculation unit 110, a color information extraction unit 120, a color transition point determination unit 130, and ion-exchange capacity calculation unit 140.

The ionic conductivity change calculation unit 110 may derive a first trend line and a second trend line for a change in ionic conductivity along reaction time of a titration solution in which a titrant is added to a solution containing anions eluted from ion-exchange membrane.

For example, the titrant may be silver nitrate (AgNO3). The titration solution may be a reaction solution in which the titrant is added at predetermined reaction time intervals to a solution containing anions, which is a target solution for reaction.

The ionic conductivity may change each time a titrant is added to a titration solution. That is, the ionic conductivity may vary along the reaction time.

The trend lines for a change in ionic conductivity along the reaction time may include the plurality of trend lines including a first trend line and a second trend line. Various methods for deriving the trend lines may be used, including a method of least squares, linear regression, polynomial regression, exponential smoothing, and a moving average.

The ionic conductivity change calculation unit 110 may calculate a first boundary point BP1 at which a gradient of the first trend line changes and a second boundary point BP2 at which a gradient of the second trend line changes, respectively.

The ionic conductivity change calculation unit 110 may select, from among the plurality of trend lines illustrating the change in ionic conductivity with respect to the reaction time, one for which a reaction time of the first boundary point is calculated as a smallest value as the first trend line, and select one for which a reaction time of the second boundary point is calculated as a largest value as the second trend line.

The ionic conductivity change calculation unit 110 may determine an area between a first reaction time of a first boundary point and a second reaction time of a second boundary point as an end point area.

The ionic conductivity change calculation unit 110 may extract a plurality of candidate end points having different reaction times within the end point area. The plurality of candidate end points may respectively have different ion conductivities and corresponding reaction times.

The color information extraction unit 120 may extract color information of the titration solution at predetermined reaction time intervals from an image illustrating a color change of the titration solution along the reaction time.

The color information extraction unit 120 may extract color information including an RGB value converted for a color extracted from the image.

The color information extraction unit 120 may generate a graph representing RGB values for a predetermined reaction time.

The color transition point determination unit 130 may extract at least one transition point based on the extracted color information.

The color transition point determination unit 130 may determine, as at least one transition point, a point where the sign of the slope of a tangent line respectively generated for each RGB value at a predetermined reaction time in the graph changes.

The color transition point determination unit 130 may select, from the at least one transition point, a transition point located between the first boundary point and the second boundary point based on the reaction time, and determine the selected transition point as the color transition point.

The color transition point determination unit 130 may determine, from among at least one transition point, a specific transition point having reaction time identical to any one of the reaction times for each of a plurality of candidate end points as the color transition point.

The ion-exchange capacity calculation unit 140 may calculate the ion-exchange capacity of the ion-exchange membrane based on the titration solution at the color transition point CTP. The ion-exchange capacity calculation unit 140 may detect the ionic conductivity and the volume of the titrant at a reaction time corresponding to the color transition point.

The ion-exchange capacity calculation unit 140 may measure the ion-exchange capacity of the ion-exchange membrane based on the volume of the titrant at the reaction time corresponding to the color transition point.

The ion-exchange capacity calculation unit 140 may calculate the ion-exchange capacity according to the following equation. [Equation] $IEC = \left(C\times f\times A\right) / D$

Wherein, IEC is the ion-exchange capacity of the ion-exchange membrane, C is the concentration (mol/L) of the titrant, f is a factor representing the total number of exchangeable anions per 1 mole of ions of the titrant, A is the volume (ml) of the titrant, and D is the dry weight (g) of the ion-exchange membrane.

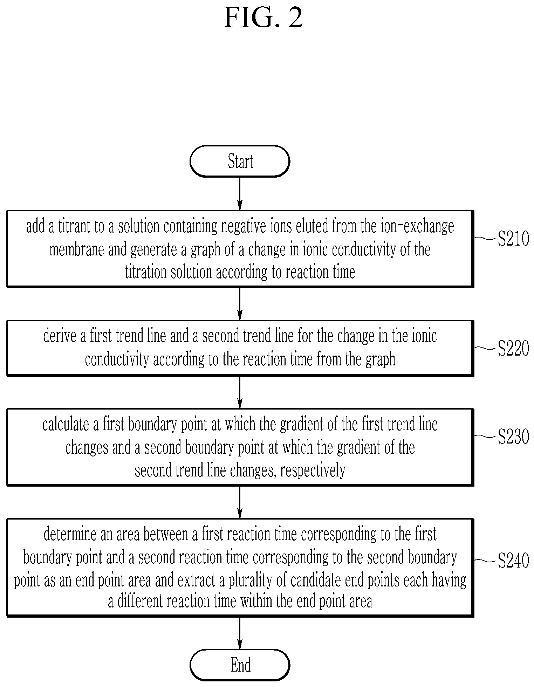

FIG. 2 is a flowchart illustrating a step of calculating candidate end points of an end-point area according to an embodiment of the present invention. The step of calculating the candidate end points of the end-point area in FIG. 2 may be performed through a device 100 for measuring an ion exchange capacity of an ion exchange membrane.

The device 100 for measuring ion-exchange capacity of the ion-exchange membrane may add a titrant to a solution containing anions eluted from the ion-exchange membrane and generate a graph of a change in ionic conductivity of the titration solution along the reaction time S210.

The device 100 for measuring ion-exchange capacity for the ion-exchange membrane may derive a first trend line and a second trend line for the change in ionic conductivity along the reaction time from the graph S220.

The device 100 for measuring ion-exchange capacity of the ion-exchange membrane may calculate a first boundary point at which the gradient of the first trend line changes and a second boundary point at which the gradient of the second trend line changes, respectively S230.

The device 100 for measuring ion-exchange capacity of the ion-exchange membrane may select, from a plurality of trend lines illustrating the change in ionic conductivity with respect to the reaction time, one for which a reaction time of the first boundary point is calculated as a smallest value as the first trend line, and select one for which a reaction time of the second boundary point is calculated as a largest value as the second trend line.

The device 100 for measuring ion-exchange capacity for the ion-exchange membrane may determine an area between a first reaction time corresponding to the first boundary point and a second reaction time corresponding to the second boundary point as an end point area, and extract a plurality of candidate end points each having a different reaction time within the end point area S240.

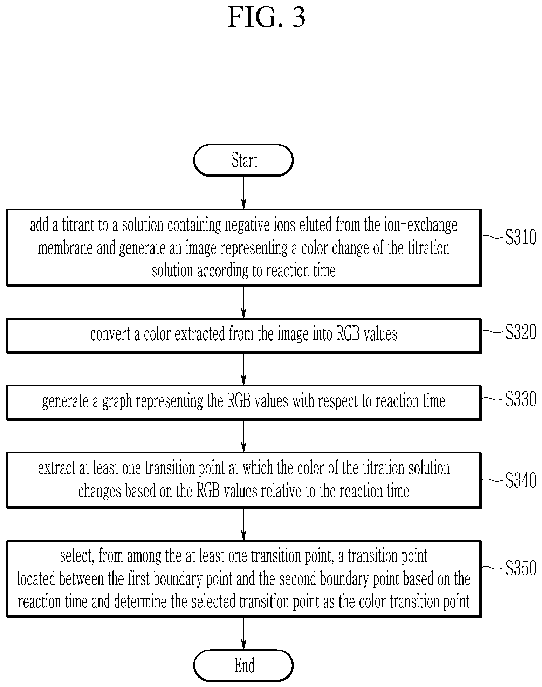

FIG. 3 is a flowchart illustrating a step of extracting a color transition point from an image. The step of extracting the color transition point CTP from the image of FIG. 3 may be performed through the device 100 for measuring ion-exchange capacity of the ion-exchange membrane.

The device 100 for measuring ion-exchange capacity of the ion-exchange membrane may add a titrant to a solution containing anions eluted from the ion-exchange membrane and generate an image representing a color change of the titration solution along the reaction time S310.

For example, the device 100 for measuring ion-exchange capacity of the ion-exchange membrane may generate video images obtained by capturing a color change of the titration solution during the reaction time.

The device 100 for measuring ion-exchange capacity of the ion-exchange membrane may convert a color extracted from the image into RGB values S320.

For example, the device 100 for measuring ion-exchange capacity of the ion-exchange membrane may extract a certain portion from the image, extract a color, and convert the extracted color into the RGB value.

The device 100 for measuring ion-exchange capacity of the ion-exchange membrane may generate a graph representing the RGB values with respect to the reaction time S330.

For example, the device 100 for measuring ion-exchange capacity of the ion-exchange membrane may generate the graph representing the RGB values of the images of the titration solution as coordinates along the reaction time.

The device 100 for measuring ion-exchange capacity of the ion-exchange membrane may extract at least one transition point at which the color of the titration solution changes based on the RGB values relative to the reaction time S340.

For example, the device 100 for measuring the ion exchange capacity of an ion exchange membrane may extract the at least one transition point where the RGB values abruptly change based on the graph generated with the coordinates for the RGB values.

The device 100 for measuring ion-exchange capacity of the ion-exchange membrane may extract a tangent line to the graph at an RGB value for a predetermined reaction time point and determine a point where the sign of the gradient of the extracted tangent line changes as the transition point.

The device 100 for measuring ion-exchange capacity of the ion-exchange membrane may select, from among the at least one transition point, a certain transition point located between the first boundary point and the second boundary point based on the reaction time and determine the selected certain transition point as the color transition point S350.

The device 100 for measuring ion-exchange capacity of the ion-exchange membrane may determine, from the at least one transition point, a specific transition point having reaction time identical to any one of the reaction times for each of the plurality of candidate end points as the color transition point.

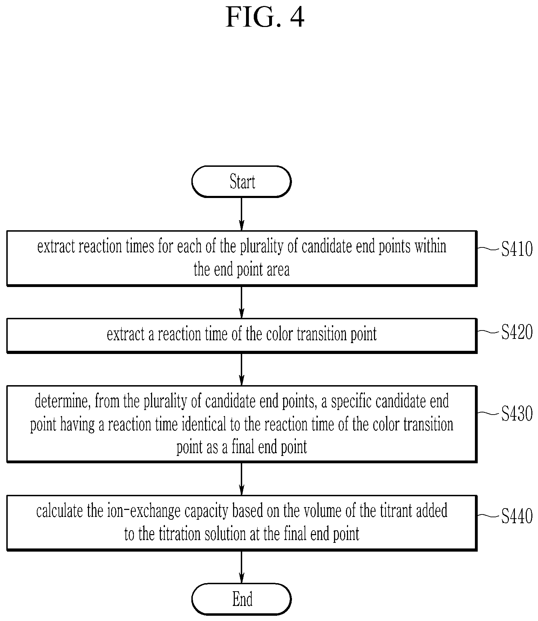

FIG. 4 is a flowchart illustrating a step of calculating ion-exchange capacity based on candidate end points and a color transition point according to an embodiment of the present invention. The step of calculating the ion-exchange capacity of FIG. 4 may be performed through the device 100 for measuring ion-exchange capacity of the ion-exchange membrane.

The device 100 for measuring ion-exchange capacity of the ion-exchange membrane may extract reaction times for each of a plurality of candidate end points within the end point area S410.

The device 100 for measuring ion-exchange capacity of the ion-exchange membrane may extract a reaction time of the color transition point S420.

The device 100 for measuring ion-exchange capacity of the ion-exchange membrane may determine, from the plurality of candidate end points, a certain candidate end point having reaction time identical to the reaction time of the color transition point as a final end point S430.

The device 100 for measuring ion-exchange capacity of the ion-exchange membrane may calculate the ion-exchange capacity based on a volume of a titrant added to the titration solution at the final end point S440.

The device 100 for measuring ion-exchange capacity of the ion-exchange membrane may detect the ionic conductivity of the titration solution and the volume of the added titrant at a reaction time corresponding to the color transition point.

The device 100 for measuring ion-exchange capacity of the ion-exchange membrane may measure the ion-exchange capacity of the ion-exchange membrane based on the volume of the titrant (AgNO3) at the reaction time corresponding to the color transition point.

The device 100 for measuring ion-exchange capacity of the ion-exchange membrane may calculate the ion-exchange capacity according to the following equation. [Equation] $IEC = \left(C\times f\times A\right) / D$

Wherein, IEC is ion-exchange capacity of ion-exchange membrane, C is the concentration (mol/L) of the titrant, f is a factor representing the total number of exchangeable anions per 1 mole of ions in the titrant, A is the volume (mL) of the titrant, and D is the dry weight (g) of the ion-exchange membrane.

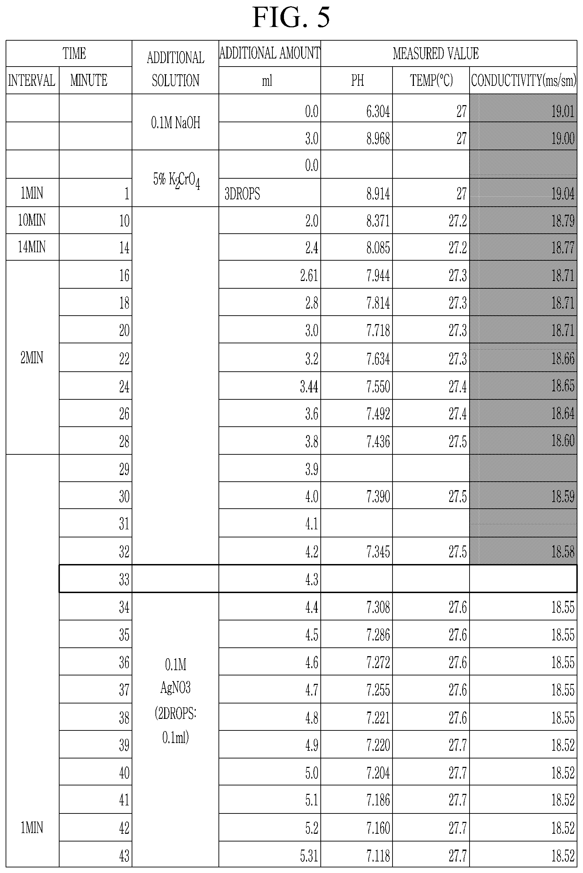

FIG. 5 is a table illustrating changes in the reaction time, the additional amount of the titrant, and ionic conductivity according to an embodiment of the present invention.

Referring to the table of FIG. 5, the titration solution may include 0.1 M sodium hydroxide (NaOH) and 5 % potassium chromate (K₂CrO₄) which are initially added. The sodium hydroxide may be included for ionic elution, and the potassium chromate may be included as an indicator.

Thereafter, 0.1 M silver nitrate (AgNO₃) may be added to the titration solution at predetermined time intervals in an amount of 0.1 mol to 0.4 mol. For example, the silver nitrate may be added to the titration solution in an amount of about 0.2 mol every 2 minutes from a reaction time of 16 minutes to 28 minutes. The silver nitrate may be added to the titration solution in an amount of about 0.1 mol every 1 minute from a reaction time of 29 minutes to 43 minutes.

Referring to the table of FIG. 5, the ionic conductivity of the titration solution in accordance with the amount of silver nitrate added for each reaction time interval may be determined. The ionic conductivity may gradually change for each reaction time interval from an initial value of 19.01 to 18.52 at the reaction time of 43 minutes.

For example, at a reaction time of 32 minutes, the additional amount of the silver nitrate is 4.2 ml and the ionic conductivity is 18.58. At a reaction time of 34 minutes, the additional amount of the silver nitrate is 4.4 ml and the ionic conductivity is 18.55.

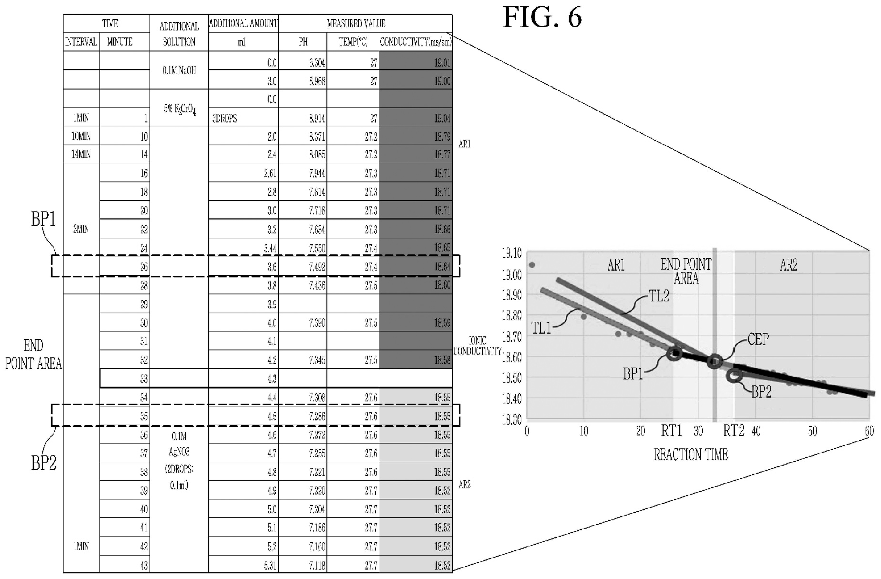

FIG. 6 is a graph illustrating the change in ionic conductivity of a titration solution along the reaction time according to an embodiment of the present invention.

In FIG. 6, a graph illustrates a first trend line TL1 and a second trend line TL2 representing a change in ionic conductivity along the reaction time. The first trend line includes a first boundary point BP1 at a first reaction time RT1. The second trend line includes a second boundary point BP2 at a second reaction time RT2.

The first boundary point may define a boundary between a first area and an end point area. The second boundary point may define a boundary between a second area and the end point area.

The first area is an area for a reaction time duration at which anions eluted from the ion-exchange membrane react with the silver nitrate. The second area is an area for a reaction time duration at which the silver nitrate and an indicator react. The end point area is an area including an end point where the reaction between the eluted anions and the silver nitrate is completed. The end point area is defined within a reaction time duration between a first reaction time and a second reaction time and may include a plurality of candidate end points CEPs.

For example, in the table of FIG. 6, the ionic conductivity of the first boundary point is 18.64, the first reaction time is 26 minutes, and the volume of the silver nitrate, which is an added titrant, is 3.6 ml. The ionic conductivity of the second boundary point is 18.55, the second reaction time is 35 minutes, and the volume of the silver nitrate, which is the added titrant, is 4.5 ml.

The end point area may correspond to a reaction time duration between 26 minutes and 35 minutes. Accordingly, there may be nine candidate end points including the first boundary point and the second boundary point. The candidate end point illustrated in the graph of FIG. 6 is shown as one example thereof.

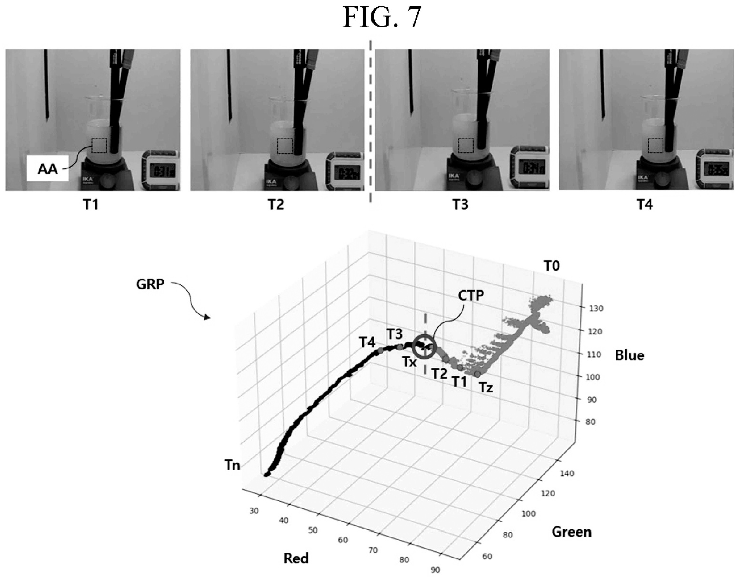

FIG. 7 is a graph illustrating color information extracted from an image representing a color change of a titration solution along reaction time according to an embodiment of the present invention.

The device 100 for measuring ion-exchange capacity of the ion-exchange membrane may detect a color from an image of a titration solution of which color changes during reaction time and extract color information including RGB values from the detected color.

The photographs in FIG. 7 show titration solution at reaction times T1, T2, T3, and T4, respectively. Although the color of the titration solution at each of T1, T2, T3, and T4 changes slightly, it is difficult to distinguish by the naked eye. For example, T1 may correspond to 31 minutes, T2 may correspond to 32 minutes, T3 may correspond to 34 minutes, and T4 may correspond to 35 minutes.

For example, the device 100 for measuring ion-exchange capacity of the ion-exchange membrane may detect a color by extracting a specific area (AA) of the image of the titration solution at each of T1, T2, T3, and T4. The device 100 for measuring ion-exchange capacity of the ion-exchange membrane may convert the detected color into the RGB values. The RGB values may be expressed as coordinates. The device 100 for measuring ion-exchange capacity of the ion-exchange membrane may generate a graph using the RGB coordinates. The graph is generated based on the RGB coordinate values along the reaction time.

In the graph GRP), the reaction time may be defined as being from T0 to Tn. The Tx and Tz are the points where the sign of the gradient of the tangent line changes. A point where the sign of the gradient of the tangent line in the graph changes may correspond to a transition point.

Both Tx and Tz correspond to transition points. For example, Tx may be an RGB coordinate value corresponding to a reaction time of 33 minutes between T2 and T3. Tz may correspond to a reaction time before 26 minutes.

Either Tx or Tz may be finally determined as a color transition point CTP. The color transition point at which the color of the titration solution changes may correspond to an end point where the reaction between the titrant and anions in the solution is terminated.

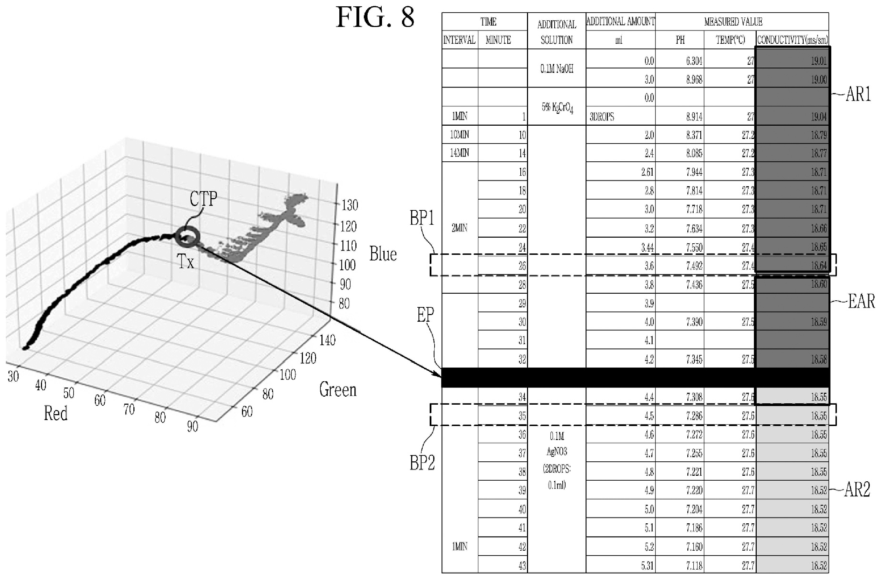

FIG. 8 is a diagram illustrating a step of detecting a final end point according to an embodiment of the present invention. FIG. 8 is described with reference to FIGS. 6 and 7.

In FIG. 8, a first area AR1 and an end point area EAR may be distinguished through the first boundary point BP1. The first area exhibits ionic conductivity during the reaction time in which a titrant and anions in a solution eluted from ion-exchange membrane react.

The second area AR2 and the end point area EAR may be distinguished through the second boundary point BP2. The second area exhibits ionic conductivity during the reaction time in which the titrant and the indicator react.

The end point area is an area including a plurality of candidate end points CEPs where a reaction between anions and the indicator in the solution is terminated. The end point area is an area corresponding to the reaction time between the first boundary point and the second boundary point. Each of the plurality of candidate end points may correspond to one of reaction times from 26 minutes to 35 minutes. That is, each of the plurality of candidate end points may be determined as one of titrant additional amounts from 3.6 ml to 4.5 ml.

The first boundary point and the second boundary point are obtained from the trend lines of the change in the ionic conductivity along the reaction time in FIG. 6.

Any one of the transition points of Tx and Tz obtained from the GRP for the RGB coordinates along the reaction time in FIG. 7 may correspond to a color transition point CTP where the color of the titration solution changes.

The device 100 for measuring ion-exchange capacity of the ion-exchange membrane may determine one of a plurality of candidate end points in an end point area as a final end point EP.

The device 100 for measuring ion-exchange capacity of the ion-exchange membrane may determine, from among a plurality of transition points Tx and Tz, one transition point that overlaps with a plurality of candidate end points as the color transition point. The device 100 for measuring ion-exchange capacity of the ion-exchange membrane may determine the color transition point as the final end point.

The reaction time of Tx is 33 minutes, and coincides with the reaction time of one of the candidate end points between the first boundary point and the second boundary point. Accordingly, the device 100 for measuring ion-exchange capacity of the ion-exchange membrane may determine Tx as the color transition point and determine the same as the final end point.

The device 100 for measuring ion-exchange capacity of the ion-exchange membrane may measure the ion-exchange capacity of the ion-exchange membrane by using 4.3 ml, which is an addition amount of the titrant at the final end point.

The device 100 for measuring ion-exchange capacity of the ion-exchange membrane may measure the ion-exchange capacity according to the following equation. [Equation] $IEC = \left(C\times f\times A\right) / D$

Wherein IEC is the ion-exchange capacity (mmol/g) of the ion-exchange membrane, C is the concentration (mol/L) of the titrant, f is a factor representing the total number of exchangeable anions per 1 mole of ions in the titrant, A is the volume (ml) of the titrant, and D is the dry weight (g) of the ion-exchange membrane.

For example, when C is 0.1 mol/L, f is 1, and D is 0.236 g, when the volume of the titrant at the final end point is 4.3 ml, the ion-exchange capacity of the ion-exchange membrane may be 1.82 mmol/g.

The device 100 for measuring ion-exchange capacity of the ion-exchange membrane may verify a calculation range of the ion-exchange capacity for the candidate end points within the end point area between the first boundary point and the second boundary point. At the first boundary point, the titrant volume is 3.6 ml and the ion-exchange capacity is 1.52 mmol/g. At the second boundary point, the titrant volume is 4.5 ml and the ion-exchange capacity is 1.91 mmol/g. That is, the final ion-exchange capacity in accordance with determination of the final end point may be determined within a range of 1.52 mmol/g to 1.91 mmol/g.

When the color transition point is detected through the graph of FIG. 6 and the GRP of FIGS. 7 and 8, the device 100 for measuring ion-exchange capacity of the ion-exchange membrane may determine the final end point and, based on the final end point, may calculate 1.82 mmol/g as the optimal ion-exchange capacity within the range of 1.52 mmol/g to 1.91 mmol/g to increase a degree of matching.

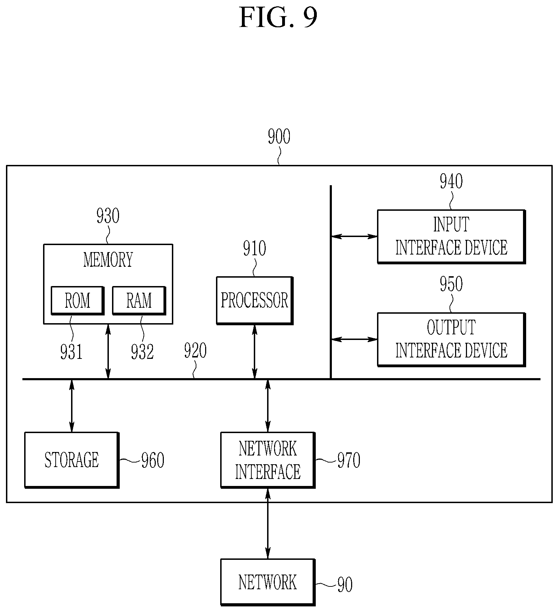

Referring to FIG. 9, a device and a method for measuring the ion exchange capacity of the ion exchange membrane according to the embodiments may be implemented using a computing device 900.

The computing device 900 may include at least one of a processor 910, a memory 930, a user interface input device 940, a user interface output device 950, and a storage device (560 that communicate through a bus 920). The computing device 900 may also include a network interface 970 electrically connected to a network 90). The network interface 970 may transmit or receive a signal to or from another entity through the network 90.

The processor 910 may be implemented as various types such as a micro controller unit MCU), an application processor AP), a central processing unit CPU), a graphics processing unit GPU), a neural processing unit NPU), etc., and may be any semiconductor device that executes instructions stored in the memory 930 or the storage device 960. The processor 910 may be configured to implement the functions and methods described above in connection with FIGS. 1 to 8.

The memory 930 and the storage device 960 may include various types of volatile or nonvolatile storage media. For example, the memory may include a read-only memory ROM 931 and a random access memory RAM 932. In the present embodiment, the memory 930 may be located inside or outside the processor 910, and the memory 930 may be connected to the processor 910 through various known means.

In some embodiments, at least some components or functions of the device and method for measuring ion-exchange capacity of ion-exchange membrane according to the embodiments may be implemented as a program or software executed on the computing device 900, and the program or software may be stored in a computer-readable medium.

In some embodiments, at least some of the components or functions of the device and method for measuring ion-exchange capacity of ion-exchange membrane according to the embodiments may be implemented using hardware or circuitry of the computing device 900, or may be implemented as separate hardware or circuitry that may be electrically connected to the computing device 900.

Although the embodiments of the present invention have been described in detail above, the scope of the present invention is not limited thereto, and various modifications and improvements made by a person of ordinary skill in the art using the basic concept of the present invention defined in the following claims also fall within the scope of the present invention.

### [INDUSTRIAL APPLICABILITY]

A device and method for measuring ion-exchange capacity of ion-exchange membrane according to an embodiment of the present invention have industrial applicability by calculating a final end point by combining a set of end point candidates determined through an ionic conductivity gradient and a color transition point CTP generated by storing and quantifying a color change of a titration solution as an image, and measuring ion-exchange capacity based thereon.

## Claims

1. A device for measuring ion-exchange capacity of ion-exchange membrane, the device comprising:
an ionic conductivity change calculation unit for deriving a first trend line and a second trend line for a change in ionic conductivity of a titration solution along reaction time wherein the titration solution being prepared by adding a titrant to a solution containing anions eluted from the ion-exchange membrane, and for calculating a first boundary point at which a slope of the first trend line changes and a second boundary point at which a slope of the second trend line changes, respectively;
a color information extraction unit for extracting color information of the titration solution at a predetermined reaction time interval from an image representing a color change of the titration solution along the reaction time;
a color transition point determination unit for extracting at least one transition point based on the extracted color information and for determining a color transition point by selecting, from the at least one transition point, a transition point located between the first boundary point and the second boundary point based on the reaction time; and
ion-exchange capacity calculation unit for calculating ion-exchange capacity of the ion-exchange membrane based on the titration solution at the color transition point.

2. The device for measuring ion-exchange capacity of ion-exchange membrane of claim 1, wherein the ionic conductivity change calculation unit selects, from a plurality of trend lines illustrating the change in ionic conductivity with respect to the reaction time, a trend line for which the reaction time of the first boundary point is calculated as the smallest value as the first trend line, and selects a trend line for which the reaction time of the second boundary point is calculated as the largest value as the second trend line.

3. The device for measuring ion-exchange capacity of ion-exchange membrane of claim 1, wherein the ionic conductivity change calculation unit determines an area between a first reaction time of the first boundary point and a second reaction time of the second boundary point as an end point area and extracts a plurality of candidate end points having different reaction times within the end point area.

4. The device for measuring ion-exchange capacity of ion-exchange membrane of claim 1, wherein the color information extraction unit extracts the color information including an RGB value converted for a color extracted from the image.

5. The device for measuring ion-exchange capacity of ion-exchange membrane of claim 4, wherein the color information extraction unit generates a graph representing the RGB values for the predetermined reaction time.

6. The device for measuring ion-exchange capacity of ion-exchange membrane of claim 5, wherein the color transition point determination unit determines, as the at least one transition point, a point at which a sign of a gradient of a tangent line respectively generated at the RGB values for the predetermined reaction time in the graph changes.

7. The device for measuring ion-exchange capacity of ion-exchange membrane of claim 3, wherein the color transition point determination unit determines, from the at least one transition point, a specific transition point having reaction time identical to any one of the reaction times for each of the plurality of candidate end points as the color transition point.

8. The device for measuring ion-exchange capacity of ion-exchange membrane of claim 1, wherein the ion-exchange capacity calculation unit detects the ionic conductivity and the volume of the titrant at the reaction time corresponding to the color transition point.

9. The device for measuring ion-exchange capacity of ion-exchange membrane of claim 8, wherein the ion-exchange capacity calculation unit measures the ion-exchange capacity of the ion-exchange membrane based on the volume of the titrant at the reaction time corresponding to the color transition point.

10. The device for measuring ion-exchange capacity of ion-exchange membrane of claim 9, wherein the ion-exchange capacity calculation unit calculates the ion-exchange capacity according to the following Equation: [Equation] $IEC = \left(C\times f\times A\right) / D$ wherein IEC is the ion-exchange capacity of the ion-exchange membrane, C is concentration (mol/L) of the titrant, f is a factor representing total number of exchangeable anions per 1 mole of ions in the titrant, A is volume (ml) of the titrant, and D is dry weight (g) of the ion-exchange membrane.

11. A method for measuring ion-exchange capacity of ion-exchange membrane, the method comprising:
adding a titrant to a solution containing anions eluted from the ion-exchange membrane and deriving a first trend line and a second trend line for a change in ionic conductivity of a titration solution along reaction time;
calculating a first boundary point at which a gradient of the first trend line changes and a second boundary point at which a gradient of the second trend line changes, respectively;
extracting color information of the titration solution at every predetermined reaction time from an image illustrating a color change of the titration solution along the reaction time;
extracting at least one transition point where a color of the titration solution is converted based on the extracted color information;
determining a color transition point by selecting, from the at least one transition point, a transition point located between the first boundary point and the second boundary point based on the reaction time; and
calculating the ion-exchange capacity of the ion-exchange membrane using the titration solution at the color transition point.

12. The method for measuring ion-exchange capacity of ion-exchange membrane of claim 11, wherein the deriving of the first trend line and the second trend line further comprises:
selecting, from a plurality of trend lines illustrating the change in the ionic conductivity with respect to the reaction time, a trend line for which reaction time of the first boundary point is calculated to be a smallest value as the first trend line; and
selecting a trend line for which a reaction time of the second boundary point is calculated to be a largest value as the second trend line.

13. The method for measuring ion-exchange capacity of ion-exchange membrane of claim 11, wherein the calculating of the first boundary point and the second boundary point, respectively, further comprises:
determining an area between a first reaction time of the first boundary point and a second reaction time of the second boundary point as an end point area; and
extracting a plurality of candidate end points having different reaction times within the end point area.

14. The method for measuring ion-exchange capacity of ion-exchange membrane of claim 11, wherein the extracting of the color information of the titration solution further comprises
extracting the color information including a converted RGB value for the color extracted from the image.

15. The method for measuring ion-exchange capacity of ion-exchange membrane of claim 14, wherein the extracting of the color information of the titration solution further comprises
generating a graph representing the RGB values for the predetermined reaction time.

16. The method for measuring ion-exchange capacity of ion-exchange membrane of claim 15, wherein the extracting of the at least one transition point further comprises
determining a point, at which the sign of the gradient of a tangent line generated at each of the RGB values for the predetermined reaction time in the graph changes, as the at least one transition point.

17. The method for measuring ion-exchange capacity of ion-exchange membrane of claim 13, wherein the determining of the color transition point further comprises
determining, from the at least one transition point, a specific transition point having reaction time identical to any one of the reaction times for each of the plurality of candidate end points as the color transition point.

18. The method for measuring ion-exchange capacity of ion-exchange membrane of claim 11, wherein the calculating of the ion-exchange capacity further comprises
detecting the ionic conductivity of the titration solution and the volume of the added titrant at reaction time corresponding to the color transition point.

19. The method for measuring ion-exchange capacity of ion-exchange membrane of claim 18, wherein the calculating of the ion-exchange capacity further comprises
measuring, by the ion-exchange capacity calculation unit, the ion-exchange capacity of the ion-exchange membrane based on the volume of the titrant at the reaction time corresponding to the color transition point.

20. The method for measuring ion-exchange capacity of ion-exchange membrane of claim 19, wherein the calculating of the ion-exchange capacity further comprises
calculating the ion-exchange capacity according to the following Equation: [Equation] $IEC = \left(C\times f\times A\right) / D$
wherein IEC is the ion-exchange capacity of the ion-exchange membrane, C is concentration (mol/L) of the titrant, f is a factor representing total number of exchangeable anions per 1 mole of ions in the titrant, A is volume (ml) of the titrant, and D is dry weight (g) of the ion-exchange membrane.
